# EUROPEAN PATENT SPECIFICATION

(11) **EP 1 813 465 B1**
(45) Date of publication and mention of the grant of the patent: **04.01.2012**
(21) Application number: 07001401.4
(22) Date of filing: 23.01.2007
(51) Int. Cl.: B60N 2/16

(54) **Belt-in seat with lifter**
Sitz mit integriertem Gurt und Heber
Ceinture de sécurité fixée au siège avec enrouleur

(30) Priority: 31.01.2006 JP 2006021890; 31.01.2006 JP 2006021891
(43) Date of publication of application: 01.08.2007
(73) Proprietor: FUJI KIKO Co., Ltd., Kosai-shi, Shizuoka 431-0431 (JP); Tachi-S Co., Ltd., Akishima-shi, Tokyo 196-8611 (JP)
(72) Inventor: Matsumoto, Tadashi, Kosai-shi Shizuoka 431-0431 (JP); Minai, Masamitsu, Akishima-shi Tokyo 196-8611 (JP)
(74) Representative: Grünecker, Kinkeldey, Stockmair & Schwanhäusser

(56) References cited:
- JP-A- 2004 176 863
- US-A1- 2005 121 585
- US-B1- 6 464 193

## Description

### BACKGROUND OF THE INVENTION

The present invention relates to a belt-in-seat with a lifter, which increases in strength in order to be able to resist a shock at the time of collision.

In seats for a vehicle, there has been a seat with a lifter (lifter seat), which can be moved upward and downward with respect to a vehicle body floor. The lifter seat is mainly provided in order for a driver to adjust his/her eye point height, and in general, it is provided for a driver's seat. The lifter seat is configured by providing a pair of driving links at one sides of front right and left sides or rear right and left sides and also providing a pair of driven links at the other sides and further providing a driving mechanism that drives the pair of driving links, between the vehicle body floor and the seat.

With respect to the driving mechanism used in the lifter seat, for example, it has been disclosed in Japanese Patent Provisional Publication No. 2004-176863 (hereinafter is referred to as "JP2004-176863"). The JP2004-176863 has disclosed an invention concerning a braking device to allow the seat to be moved upward and downward by hand as the driving mechanism. And the braking device is installed or fixed to a seat side frame such that a lock drum that covers an outside of the braking device is fixed to or connected with the seat side frame. And more specifically, an outer end portion of a center shaft, an inner end portion of which is detachable to a guide shaft of the braking device, is inserted into a bearing hole of the seat side frame. By this configuration, the seat side frame can stop a sector gear from falling down in a direction in which the sector gear is shifted or becomes misaligned from an engagement with a pinion.

On the other hand, a belt-in-seat with the lifter (the lifter seat provided with a seat belt retractor), which is different in position of the seat belt retractor from the lifter seat, has been developed to meet a growing request that the seat belt retractor should be provided to or installed in the lifter seat. In the belt-in-seat with the lifter, the seat belt retractor is not connected to a vehicle body, whereas the retractor of the lifter seat is connected to the vehicle body. And in the case of the belt-in-seat with the lifter, an inertia force exerted to a passenger at the time of collision of the vehicle is exerted to the seat through the seatbelt, whereas in the case of the lifter seat, a weight of the passenger is not exerted to the seat at the time of collision of the vehicle.

The inertia force exerted to the passenger at the time of collision of the vehicle is exerted to a seat side member (seat side frame) through the seatbelt. Further, the inertia force from the seat side member is exerted to the driving mechanism through the driving link. Because of this, an extremely great force is exerted to an engagement portion between the sector gear and the pinion at the collision. And when the generally used driving mechanism in the lifter seat is applied to the belt-in-seat with the lifter as it is, due to the extremely great force, the sector gear might fall down in right or left axial direction and the engagement with the pinion might shift, and thereby decrease the strength. In addition, in a case where the force in the direction in which the sector gear falls down is great, the seat side frame serving to prevent the sector gear from falling down might be bended by being pressed or jerked by the sector gear at the collision, and there is a possibility that the seat side frame will not act as an adequate stopper.

For the above problem, for the belt-in-seat with the lifter, an adequate strength to resist or withstand a great load exerted to or put on the seat should be required. And, Japanese Patent Provisional Publication No. 2005-112104 (hereinafter is referred to as "JP2005-112104") has disclosed a belt-in-seat with the lifter. In JP2005-112104, a side frame of the seat side member is formed in a box shape, which forms a closed section. And a pair of driving and driven links, which are respectively disposed at front and rear portions, are formed as a pair of lifter links. Further, a connecting arm is bended and formed to an inverted U-shaped curve. And then, a sector gear is supported by front end portion of the connecting arm. In more detail, the sector gear is supported such that an eccentric position of the sector gear is located inside the front end portion of the connecting arm, which is formed to the inverted U-shaped curve. In other wards, the eccentric position of the sector gear is sandwiched between both sides of the front end portion of the connecting arm, which is formed to the inverted U-shaped curve. And this connecting portion between the connecting arm and the sector gear is housed or accommodated inside the box-shaped seat side member. By the above configuration, even if the inertia force exerted to the passenger at the time of collision of the vehicle is exerted to the sector gear through the side frame (seat side member) and the connecting arm forming a driving mechanism, a strength of the connecting portion between the connecting arm and the sector gear can be secured.

### SUMMARY OF THE INVENTION

However, in the above belt-in-seat with the lifter in JP2005-112104, the connecting portion between the connecting arm and the sector gear has to be installed or mounted inside the box-shaped side frame during assembly. Because of this, it leads to additional effort, and this assembly is not suitable for mass production of the belt-in-seat with the lifter. On the other hand, in the case of JP2004-176863, the braking device is fixed to the normal shaped seat side frame, and the assembly is therefore easy as compared with that in JP2005-112104. However, in this case, there is a possibility that the sector gear will fall down and the engagement with the pinion will shift at the collision, and the strength is not adequate.
This risk of falling down is excluded regarding the seat structure of US 2005/0121585.

It is therefore an object of the present invention to provide a belt-in-seat with a lifter, which is capable of preventing the decrease in strength due to the shift of the engagement between the sector gear and the pinion at the collision and is easy to be assembled.

According to one aspect of the present invention, a belt-in-seat with a lifter mounted on a vehicle body floor, comprises a seat side member; a pair of driving links, each of which is provided at a rear side of the seat side member between the vehicle body floor and the seat side member, and is rotatably connected with the seat side member; a pair of driven links, each of which is provided at a front side of the seat side member between the vehicle body floor and the seat side member, and is rotatably connected with the seat side member; an operating unit that is provided at the seat side member and has a pinion gear at an output shaft of the operating unit; a sector gear that is meshed with the pinion gear and is driven by the operating unit; an actuation shaft that is formed in right and left directions of vehicle body and fixedly connected with the sector gear as a rotation axis of the sector gear, both ends of the actuation shaft being rotatably supported by the seat side member; an eccentric shaft that is provided at the sector gear in a different position from the actuation shaft and projects substantially parallel to the actuation shaft; a connecting arm that is formed in forward and backward directions of the seat, and connects the eccentric shaft and the driving link for conveying a rotation of the sector gear to the driving link; and a plate provided at an axial side of the section gear, the plate being disposed substantially parallel to the sector gear and fixedly connected with the actuation shaft and further being connected with the eccentric shaft.

The other objects and features of this invention will become understood from the following description with reference to the accompanying drawings.

### BRIEF DESCRIPTION OF THE DRAWINGS

FIG. 1 is a perspective view showing a right side of a belt-in-seat with a lifter.

FIG. 2 is a side view showing a right side of the belt-in-seat with the lifter, viewed from an inside of the belt-in-seat.

FIG. 3 is a sectional view taken along arrow A-A of FIG. 2.

FIG. 4 is a sectional view taken along arrow B-B of FIG. 2.

FIG. 5 is a sectional view taken along arrow C-C of FIG. 2.

FIG. 6 is a perspective view showing a side bracket, viewed from an inside of the belt-in-seat.

FIGS. 7A to 7C are respectively a left side sectional view, a plane sectional view, and a front view of a restraint member provided inside the side bracket.

### DETAILED DESCRIPTION OF THE INVENTION

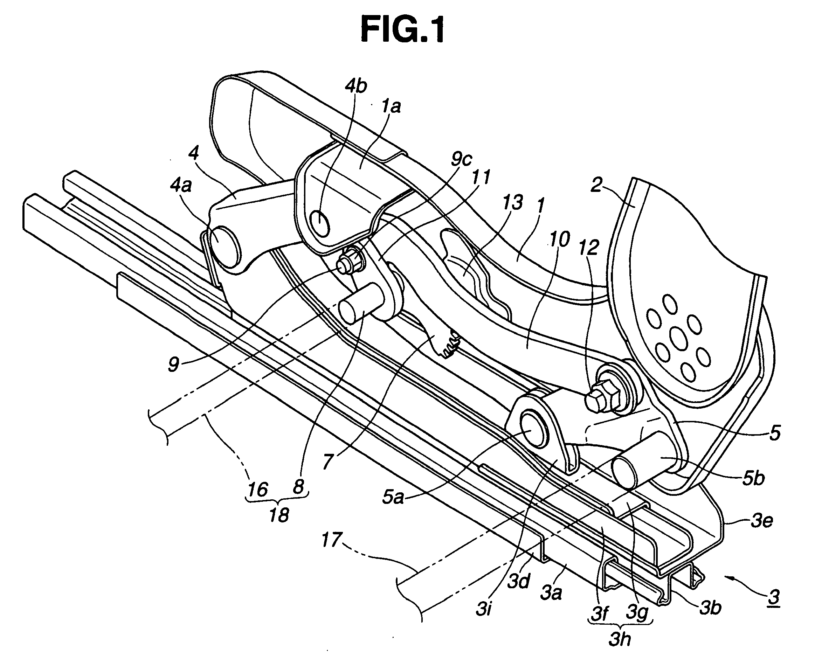

Embodiment of a belt-in-seat with a lifter (or a seat belt-integrated seat with a lifter, or a lifter seat integral with a seat belt, having a seat belt retractor inside a seat back and a belt drawer portion at a shoulder of the seat back) according to the present invention will be explained below with reference to the drawings. Fig. 1 is a perspective view showing a right side of the seat back of the belt-in-seat with the lifter. The seat back is provided with the belt drawer (not shown) at its right upper portion, and has a buckle (not shown) at its left lower portion. A left side of the seat back is substantially symmetrical to the right side of the seat back, thus the right side of the seat back will be mainly explained.

A seat side member of the belt-in-seat with the lifter has a side bracket 1 to which a seat cushion is attached or installed, and an arm bracket 2 to which the seat back is installed. On a vehicle body floor, a seat slide mechanism 3 is provided.

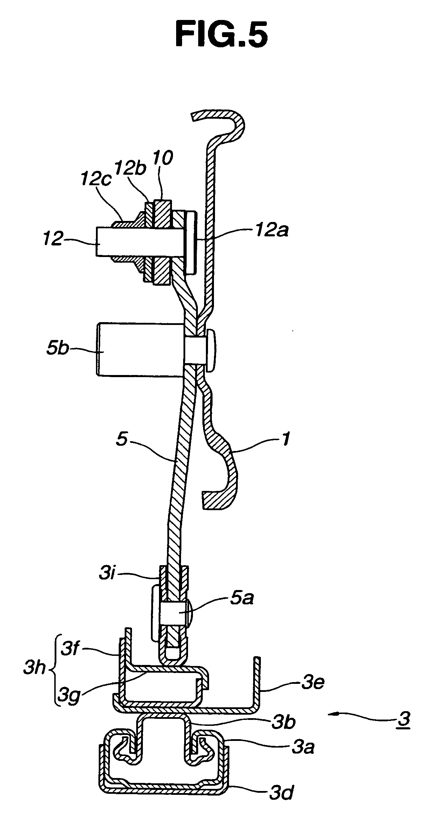

As shown in Figs. 1 and 5, the seat slide mechanism 3 has a lower rail 3a that is connected with or fixed to the vehicle body floor, and an upper rail 3b that is capable of sliding along the lower rail 3a. The lower rail 3a is formed in a shape as shown in Fig. 5. That is, it is formed such that both top side portions of an upper opened square bracket shape ( "]" ) are folded back inwardly. On an outer surface of the lower rail 3a (under the lower rail 3a), a reinforcing member 3d formed in the square bracket ( "]" ) in cross section is provided and fixed to the lower rail 3a by welded connection. Then, when a bending load in the upper direction is exerted to the lower rail 3a, the reinforcing member 3d that sandwiches both walls of the lower rail 3a from both sides prevents the both walls of the lower rail 3a from opening. Further, in order for the lower rail 3a not to warp longitudinally, the reinforcing member 3d reinforces the lower rail 3a. On the upper rail 3b, a supporting bracket 3e formed in "J" shape in cross section is provided and fixed to the upper rail 3b with a bolt and a nut etc.. And a lower portion of a seatbelt is connected to this supporting bracket 3e. On the supporting bracket 3e, a base plate 3h is provided and fixed to the supporting bracket 3e by welded connection. In addition, on the base plate 3h, as shown in Figs. 1 and 5, a pair of plate pieces 3f and 3g, each of which rises or extends upwardly, are formed to a box shape and are connected with or fixed to the base plate 3h.

Between the seat slide mechanism 3 and the side bracket 1 of the seat side member, one driven link 4 of a pair of driven links is provided at a front side of the side bracket 1, while one driving link 5 of a pair of driving links is provided at a rear side of the side bracket 1. A lower portion of the driven link 4 is rotatably connected with an upper portion of the base plate 3h via a rotation shaft or axis 4a. On the other hand, an upper portion of the driven link 4 is rotatably connected with the side bracket 1 via a bearing member 1a and a rotation shaft or axis 4b. Meanwhile, as for the driving link 5, it is substantially triangle in shape. And a lower portion of the driving link 5 is rotatably connected with an upper surface of the base plate 3h via a triangle shaped bearing member 3i that is bended to "U" shape and a rotation shaft or axis 5a. On the other hand, an upper portion of the driving link 5 is rotatably connected with the side bracket 1 via a rotation shaft or axis 5b that is positioned at one vertex of three vertexes.

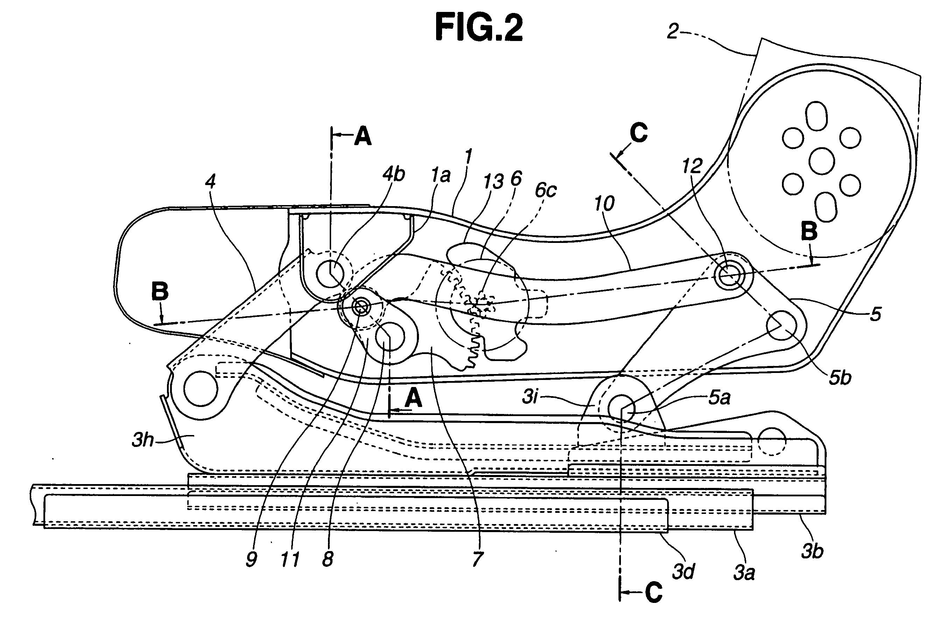

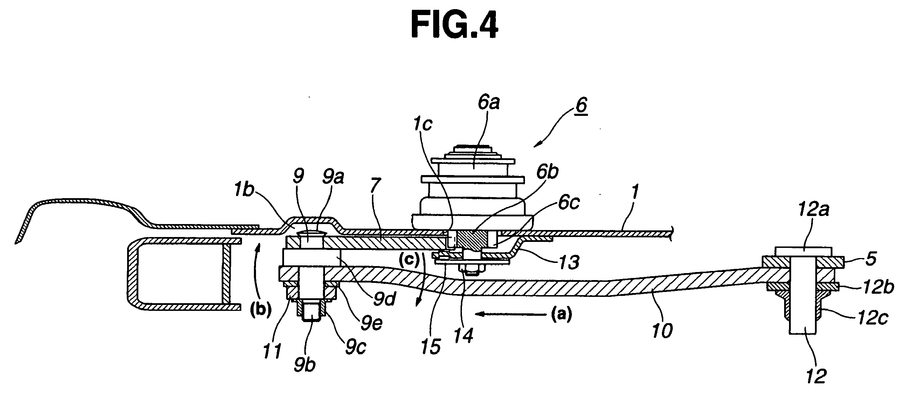

In addition, as shown in Figs. 2 and 4, an operating handle 6 to operate or drive the driving link 5 as an operating or driving unit (or means) is provided on an outer side of the side bracket 1, inside a vehicle door. The operating handle 6 can rotate an output shaft 6b in right and left rotation directions by rotating a handle 6a by means of a manual operating handle (not shown). However, the operating handle 6 is configured such that the operating handle 6 is not rotated by the output shaft 6b (and also output shaft side). As can be seen in Fig. 4, the operating handle 6 is connected with or fixed to the side bracket 1 such that the output shaft 6b of the operating handle 6 is inserted into a hole 1c formed at the side bracket 1 from an outside of the side bracket 1. The output shaft 6b is integrally formed with a pinion gear 6c. And a sector gear 7 engages or meshes with the pinion gear 6c, and is integrally fixed to (or is fixedly connected with) an operation or actuation shaft portion 8. Here, with respect to the operating handle, there is an operating handle that is configured such that the output shaft is detachable to the operating handle in an axial direction. However, in this embodiment, the operating handle 6 is configured such that the output shaft 6b can not be pulled out in the axial direction.

The actuation shaft portion 8 provided with the sector gear 7 is formed of solid material as shown in Figs. 1 to 3. In more detail, the actuation shaft portion 8 is provided in right and left directions of the vehicle body, and further is rotatably supported by the side bracket 1 via a bearing bush 1d. As shown in Figs. 1 to 3, an eccentric shaft 9 is provided in an eccentric position on the sector gear 7, which is different from a position of the actuation shaft portion 8. More specifically, the eccentric shaft 9 is provided to be substantially parallel to the actuation shaft portion 8 and projects in a direction opposite to the operating handle 6. And a front end portion of a connecting arm 10 is rotatably linked with the eccentric shaft 9. The connecting arm 10 is formed to be long in the forward and backward directions of the seat so as to convey a rotation of the sector gear 7 to the driving link 5. A rear end portion of the connecting arm 10 is rotatably linked with the driving link 5 at the rest of the vertexes of the triangle shaped driving link 5 via a rotation shaft or axis 12. By the above linkage, when the sector gear 7 is rotated to and fro, the connecting arm 10 is moved in the forward and backward directions of the vehicle body, and further the driving link 5 and the driven link 4 are rotated, and thus, the side bracket 1 is moved up and down.

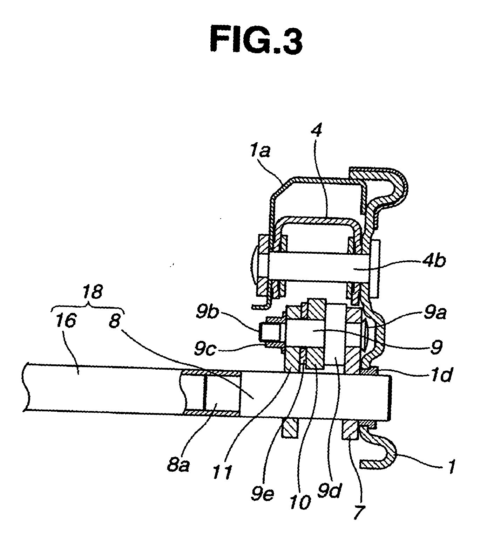

Next, a connecting portion between the eccentric shaft 9 and the front end portion of the connecting arm 10 will be explained in detail. At the collision of the vehicle, the eccentric shaft 9 receives a great load in a forward direction of the vehicle from the connecting arm 10, and there is a possibility that the eccentric shaft 9 will fall down together with the sector gear 7. For the sake of preventing this, as shown in Fig. 3, a reinforcing arm (or a reinforcing plate, or simply a plate) 11 is disposed to be substantially parallel to the sector gear 7 as a falling-down-restraint member in order to support both ends of the eccentric shaft 9 in cooperation with the sector gear 7. This reinforcing arm 11 is integrally fixed to the actuation shaft portion 8 and the eccentric shaft 9. In more detail, the reinforcing arm 11 is formed separately from the actuation shaft portion 8, and the actuation shaft portion 8 is inserted into one of two holes that are formed on the reinforcing arm 11 (or conversely, the reinforcing arm 11 is fitted onto the actuation shaft portion 8), and then the actuation shaft portion 8 and the reinforcing arm 11 are fixed to each other by welded connection. Further, the eccentric shaft 9 is inserted into the other hole on the reinforcing arm 11, and is connected with the reinforcing arm 11 with a nut 9c. As can be seen in Fig. 4, a flange portion 9d is formed at the eccentric shaft 9 to reduce bend or misalignment of the connecting arm 10 by adjusting a space or distance between the sector gear 7 and the connecting arm 10. Furthermore, a riveted portion 9a is formed at one end of the eccentric shaft 9 by being riveted after the eccentric shaft 9 is inserted into a hole of the sector gear 7. At the other end of the eccentric shaft 9, the nut 9c is screwed onto a male thread portion 9b of the eccentric shaft 9 after the eccentric shaft 9 is inserted into respective holes of the connecting arm 10 and a collar 9e and the reinforcing arm 11. The collar 9e is provided for adjusting a space or clearance so that the connecting arm 10 can relatively rotate between the flange portion 9d and the nut 9c that is screwed to an end thread of the male thread portion 9b. When the sector gear 7 rotates about the actuation shaft portion 8, the riveted portion 9a also revolves or rotates. So, in order for the riveted portion 9a not to touch an inner surface of the side bracket 1, a groove or recessed portion 1b is formed in a circular arc shape, whose center corresponds to the actuation shaft portion 8, on the inner surface of the side bracket 1.

On the other hand, a rear end portion of the connecting arm 10 is linked with the driving link 5 as shown in Fig. 4. The rotation shaft 12 having a head 12a is inserted into respective holes of the driving link 5 and the connecting arm 10 and a flat or plain washer 12b, and a nut 12c is screwed onto a threaded portion formed on the rotation shaft 12.

Next, an assembly of the actuation shaft portion 8, the sector gear 7, the reinforcing arm 11, the eccentric shaft 9 and the connecting arm 10 will be explained. The assembly is made by the following procedure. Firstly, the riveted portion 9a of the eccentric shaft 9 is riveted after being inserted into the hole of the sector gear 7. And then, the sector gear 7 from which this eccentric shaft 9 projects is fixed to the actuation shaft portion 8 at a predetermined position of one end of the actuation shaft portion 8 by welding. Secondly, the eccentric shaft 9 is inserted into the hole formed at the front end portion of the connecting arm 10, and the actuation shaft portion 8 is inserted into the one hole of the reinforcing arm 11. And also, the eccentric shaft 9 is inserted into the other hole of the reinforcing arm 11 via the collar 9e, then the nut 9c is screwed onto the male thread portion 9b of the end of the eccentric shaft 9. Then lastly, the actuation shaft portion 8 is fixed to the reinforcing arm 11 by welding. In this way, sub assembly (or a sub assembly) of the actuation shaft portion 8, the sector gear 7, the reinforcing arm 11, the eccentric shaft 9 and the connecting arm 10 is completed. Here, in a case where the actuation shaft portion 8 is long, it could be possible that the sector gear 7 is fixed to the actuation shaft portion 8 by welding after the actuation shaft portion 8 is inserted into the one hole of the reinforcing arm 11. Afterwards, the sub assembly is installed to the side bracket 1 in the following. The actuation shaft portion 8 is inserted into the bearing bush 1d. And further, the sector gear 7 is meshed or engaged with the pinion gear 6c of the operating handle 6 while turning the actuation shaft portion 8 in a clockwise direction in Fig. 2 together with the sector gear 7. Here, to prevent the actuation shaft portion 8 from being pulled out, a push nut etc. might be screwed onto an end of the actuation shaft portion 8, which protrudes outward from the bearing bush 1d of the side bracket 1.

And after that, the rear end portion of the connecting arm 10 is linked with the driving link 5. By the above linkage, when the sector gear 7 is rotated in a counterclockwise direction in Fig. 2, which is opposite to the direction during the above installation of the sector gear 7, since there is no tooth at the lower portion of the sector gear 7, the engagement between the sector gear 7 and the pinion gear 6c becomes misaligned. However, an undersurface of the front end portion of the connecting arm 10 touches the actuation shaft portion 8, in other wards, the connecting arm 10 rides on the actuation shaft portion 8, then a further rotation of the sector gear 7 is limited or restrained by the actuation shaft portion 8, and thereby preventing the misalignment of the engagement between the sector gear 7 and the pinion gear 6c. On the other hand, regarding a limitation when the sector gear 7 is rotated in the clockwise direction, it is made by providing a no-tooth portion at the sector gear 7 such that the pinion gear 6c does not mesh with the sector gear 7.

At the time of the collision of the vehicle, an inertia force exerted to a passenger is exerted to an upper portion of the arm bracket 2 through the seatbelt. Further, the force is conveyed from the arm bracket 2 to the side bracket 1, moreover, is conveyed from the side bracket 1 to the connecting arm 10 through the rotation shaft 5b and the driving link 5. And then, as shown is Fig. 4, a load in a direction indicated by an arrow (a) is put on the connecting arm 10. This load acts on a position of the hole of the side bracket 1, where the actuation shaft portion 8 is supported, and a position of the engagement (or engaging portion) between the sector gear 7 and the pinion gear 6c. However, since these positions and a position of the connecting arm 10 are shifted or deviate from each other in the right and left directions of the vehicle body, a bending moment in a direction indicated by an arrow (b), whose center is close to the riveted portion 9a, is applied to the sector gear 7. And then, a top end portion where teeth are provided on the sector gear 7 attempts to shift or separate from the pinion gear 6c in a direction indicated by an arrow (c). However, in the present invention, with respect to the eccentric shaft 9 linked with the connecting arm 10, it is supported by the sector gear 7 and the reinforcing arm 11 at both ends of the eccentric shaft 9. Therefore, the bending moment in the direction indicated by the arrow (b), which acts on the sector gear 7, can be reduced. Accordingly, this restrains the sector gear 7 from falling down, and also prevents the sector gear 7 from shifting with respect to the pinion gear 6c, and thereby inhibiting reduction in strength caused by the misalignment (shift) of the engagement.

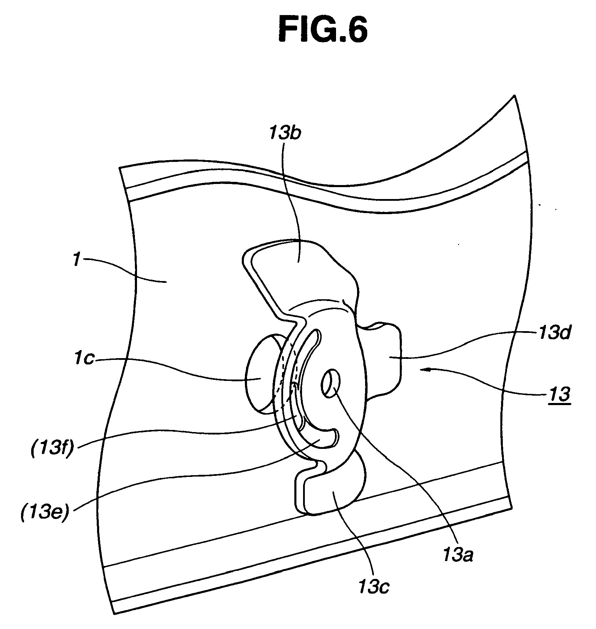

In addition to this, in the present invention, in order to restrain the top end portion of the sector gear 7 from falling down in an axial direction of the output shaft 6b, a restraint or holding member 13 is provided as the falling-down-restraint member. As shown in Fig. 6, in the restraint member 13, an insertion hole 13a is formed. And the restraint member 13 is provided under a state where a top end of the output shaft 6b penetrates the insertion hole 13a (that is, the restraint member 13 rotatably supports the top end of the output shaft 6b). Further, connecting portions 13b, 13c and 13d are bended and formed in three directions except a direction in which the sector gear 7 meshing with the pinion gear 6c is disposed such that the connecting portions 13b, 13c and 13d project or extend in the three directions. The connecting portions 13b, 13c and 13d are fixed to the inner surface of the side bracket 1 by welding. As shown in Fig. 4, a nut 14 as a stopper is screwed onto an top end portion (a male thread portion) of the output shaft 6b inserted into the insertion hole 13a via a disk 15 in order to restrain the restraint member 13 from shifting or moving in a direction in which the restraint member 13 is detached or pulls out from the output shaft 6b. The disk 15 is sandwiched between a stepped portion of an end thread portion of the output shaft 6b and the nut 14 (as shown in Fig. 4, sandwiched between the restraint member 13 and the nut 14), and rotates integrally with the output shaft 6b. Further, the disk 15 acts as the falling-down-restraint member together with the restraint member 13 to restrain the sector gear 7 from falling down.

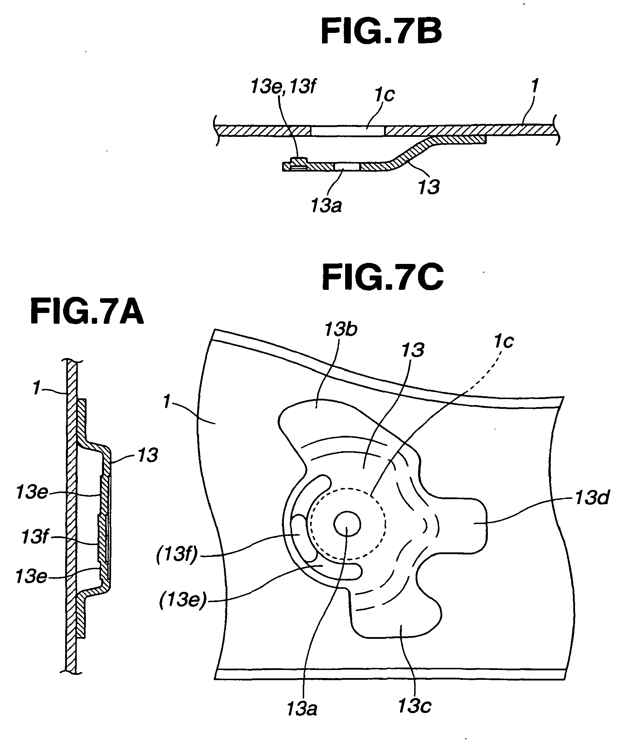

With respect to the restraint member 13, as shown in Figs. 6 and 7A ~ 7C, a convex section (a first convex section) 13e is formed on an inner surface of the restraint member 13, which faces the sector gear 7. In more detail, the convex section 13e protrudes from the inner surface of the restraint member 13 toward the sector gear 7 in the axial direction of the output shaft 6b. And further, the convex section 13e is formed substantially along an arc of a semicircle, whose center is the insertion hole 13a, on one side of the restraint member 13 where the sector gear 7 is disposed. In addition, on the middle in the longitudinal direction of the convex section 13e, a substantially arc-shaped convex section (a second convex section) 13f is formed such that the convex section 13f protrudes more than the convex section 13e. That is, two-stepped convex section is formed by the convex sections 13e and 13f. The convex section 13f is the one that restrains the sector gear 7 from falling down, and also in a case the sector gear 7 touches the restraint member 13, prevents a tip or edge of the tooth of the sector gear 7 from directly touching the restraint member 13, and reduces a sliding resistance by reducing a sliding area with the sector gear 7.

The right side of the belt-in-seat with the lifter is configured as shown in Fig. 1. While the left side of the belt-in-seat with the lifter is configured in the same manner as the right side, except that the operating handle 6 and the sector gear 7 are not provided for the left side. And as shown in Fig. 3, with respect to the actuation shaft portion 8 provided on both right and left sides, a small diameter portion 8a is formed at an inner end portion of the actuation shaft portion 8. Then, a hollow connecting shaft portion 16 is fitted to the right and left small diameter portions 8a, and the right and left actuation shaft portions 8 are connected to each other, and thereby forming an actuation shaft 18. On the other hand, as for the rotation shaft 5b, in the same manner as the actuation shaft portion 8, both sides of the rotation shaft 5b are connected to each other by a connecting shaft 17. By this linkage, when the sector gear 7 provided for the right side is rotated by means of the operating handle 6, both sides of the connecting arms 10 and the driving links 5 can rotate or move in synchronization with each other.

Next, working of the belt-in-seat with the lifter will be explained below. To move the seat up and down by the upward and downward movements of the side bracket 1, the handle 6a of the operating handle 6 is rotated in the right or left rotation direction by means of the manual operating handle (not shown). Then, its rotation is conveyed to the sector gear 7 through the output shaft 6b and the pinion gear 6c, and the sector gear 7 rotates about the actuation shaft portion 8 in either rotation direction. And since the eccentric shaft 9, both ends of which are supported by the sector gear 7 and the reinforcing arm 11 (or conversely, the eccentric shaft 9 supports the sector gear 7 and the reinforcing arm 11 at both ends of the eccentric shaft 9 for connecting the sector gear 7 and the reinforcing arm 11), moves in the forward and backward directions of the vehicle body, the upper portion of the driving link 5 linked with the eccentric shaft 9 via the connecting arms 10 rotates about the rotation shaft 5a. Further, the upper portion of the driven link 4 connecting to the driving link 5 via the side bracket 1 also rotates about the rotation shaft 4a in the same direction. The side bracket 1 therefore moves up and down. On the upward and downward movements of the side bracket 1, as mentioned above, the left actuation shaft portion 8 rotates in synchronization with the right actuation shaft portion 8 via the connecting shaft portion 16. So, needless to say, both sides of the side brackets 1 move up and down in synchronization with each other. Here, as previously described, the operating handle 6 is configured such that the operating handle 6 is not rotated by the output shaft 6b. Thus, even though the output shaft 6b attempts to rotate due to weight of the passenger via the side bracket 1 and the sector gear 7, the seat is not lowered or does not sink by rotation restraint of the operating handle 6.

Next, function of the belt-in-seat with the lifter and action of the inertia force at the collision will be explained. Since the belt drawer is connected to the upper portion of the arm bracket 2, the inertia force in the forward direction of the vehicle, which is exerted to the passenger, is exerted to the arm bracket 2 and further a rear portion of the side bracket 1 through the seatbelt at the time of the collision of the vehicle. Then, the inertia force is conveyed to the connecting arm 10 from the side bracket 1 through the rotation shaft 5b and the driving link 5. As indicated by the arrow (a) of Fig. 4, although the load in the forward direction in which the connecting arm 10 is pushed out acts on the eccentric shaft 9, since the sector gear 7 and the reinforcing arm 11 support the eccentric shaft 9 at the both sides of the eccentric shaft 9, the bending moment that attempts to rotate the sector gear 7 in the direction indicated by the arrow (b) can be reduced. And the sector gear 7 can be prevented from falling down in the direction indicated by the arrow (c), and then the top end portion of the sector gear 7 can be prevented from shifting from the pinion gear 6c. Hence, it is possible to inhibit the reduction in strength caused by the misalignment (shift) of the engagement between the sector gear 7 and the pinion gear 6c.

In the present invention, as described above, the actuation shaft portion 8, the sector gear 7, the reinforcing arm 11, the eccentric shaft 9 and the connecting arm 10 are first assembled as the sub assembly. And after that, this sub assembly is installed to the side bracket 1 such that the sub assembly is put in or inserted into the side bracket 1 from a side of the side bracket 1. Thus, the workability of assembly can be improved.

Further, at the time of the collision of the vehicle, the inertia force exerted to the passenger is exerted to the side bracket 1 through the seatbelt, and the inertia force is further conveyed from the side bracket 1 to the eccentric shaft 9 through the connecting arm 10, and this causes the attempt to tilt or topple the sector gear 7. However, the restraint member 13 restrains the top end portion of the sector gear 7 from falling down and shifting, so that this prevents the mesh between the sector gear 7 and the pinion gear 6c from coming out. The restraint member 13 is fixed to the side bracket 1 at the periphery thereof on the three directions (that is, at the connecting portions 13b, 13c and 13d), and a central portion of the restraint member 13 is secured by the nut 14 and the disk 15. As a result, the shift of the top end portion of the sector gear 7 is certainly restrained. And even if the restraint member 13 is pressed by the sector gear 7, the restraint member 13 is prevented from being deformed or disfigured by the nut 14 and the disk 15. Hence, the engagement between the sector gear 7 and the pinion gear 6c can be secured.

With respect to the nut 14, it can be easily screwed onto the output shaft 6b, and it acts as the stopper that restrains the restraint member 13 from moving in the axial direction of the output shaft 6b. Then, the restraint member 13 is prevented from being separated from the top end portion of the output shaft 6b, and the pinion gear 6c can be supported by both of the side bracket 1 and the restraint member 13. Further, as mentioned above, although there is a possibility that the sector gear 7 will fall down and press the restraint member 13 at the collision, even so, the restraint member 13 is prevented from being deformed or disfigured by the nut 14 and the disk 15. The sector gear 7 too cannot easily fall down and cannot easily be deformed by the restraint member 13, the nut 14 and the disk 15. It is therefore possible to prevent the misalignment of the engagement between the sector gear 7 and the pinion gear 6c, and then to increase the strength as the belt-in-seat with the lifter.

In addition, in the present invention, regarding the restraint member 13, convex section 13e is formed at the restraint member 13. This therefore prevents a deflection or warp of the restraint member 13, and the restraint member 13 can certainly restrain the top end portion of the sector gear 7 from falling down. Furthermore, the convex section 13f is formed at the convex section 13e. So, even if the top end portion of the sector gear 7 touches the restraint member 13, the top end portion touches only the convex section 13f, and the sliding area with the sector gear 7 and the sliding resistance are reduced. Then, when the handle 6a of the operating handle 6 is rotated under this condition, an excessive force is not needed to turn the operating handle 6.

Moreover, in the present invention, the reinforcing arm 11 is disposed to be substantially parallel to the sector gear 7, and supports both ends of the eccentric shaft 9 in cooperation with the sector gear 7. Thus, even if the inertia force is conveyed to the eccentric shaft 9 through the side bracket 1 and the connecting arm 10 etc. at the collision, the bending moment acting on the sector gear 7 through the eccentric shaft 9 can be reduced, and the sector gear 7 is prevented from falling down and shifting or separating from the pinion gear 6c. Hence, the reduction in the strength caused by the shift of the engagement between the sector gear 7 and the pinion gear 6c can be avoided.

Further, the actuation shaft portion 8 is formed of the solid material, and is rotatably supported by the side bracket 1 via the bearing bush 1d. Therefore, even if the load is put on the actuation shaft portion 8, which is fixed to the sector gear 7 and the reinforcing arm 11, through the connecting arm 10 and the eccentric shaft 9 and the sector gear 7, the actuation shaft portion 8 can be prevented from being crushed and deformed. Accordingly, the shift of the engagement between the sector gear 7 and the pinion gear 6c, caused by the change of an axial distance between the actuation shaft portion 8 and the pinion gear 6c, can be avoided, and the decrease in the strength due to the shift of the engagement can be restrained. On the other hand, a part of the actuation shaft 18 is formed by the connecting shaft portion 16 that is formed of hollow member. Therefore, this leads to weight reduction of the actuation shaft 18, and then the workability of assembly can be improved.

In the present invention, the restraint member 13 is fixed to the side bracket 1 by welding. However, it could be fixed with bolts. Further, with respect to the nut 14 as the stopper, it is screwed onto the male thread portion of the output shaft 6b. However, the stopper is not to limited to this. Instead of the male thread portion, a female thread portion could be formed at the top end portion of the output shaft 6b, and a bolt is screwed into the female thread portion as the stopper. Or, a small diameter portion might be formed at the top end portion of the output shaft 6b, and a ring-shaped disk is inserted into the small diameter portion, and then a retaining screw is screwed into the small diameter portion. Furthermore, in the present invention, the seat slide mechanism 3 is provided between the vehicle body floor and the driven and driving links 4, 5. However, the seat slide mechanism 3 might not particularly be provided in the present invention.

This application is based on a prior Japanese Patent Application No. 2006-021890 filed on January 31, 2006, and a prior Japanese Patent Application No. 2006-021891 filed on January 31, 2006.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A belt-in-seat with a lifter mounted on a vehicle body floor, comprising:
a seat side member;
a pair of driving links (5), each of which is provided at a rear side of the seat side member between the vehicle body floor and the seat side member, and is rotatably connected with the seat side member;
a pair of driven links (4), each of which is provided at a front side of the seat side member between the vehicle body floor and the seat side member, and is rotatably connected with the seat side member;
an operating unit (6) that is provided at the seat side member and has a pinion gear (6c) at an output shaft (6b) of the operating unit (6);
a sector gear (7) that is meshed with the pinion gear (6c) and is driven by the operating unit (6);
an actuation shaft (8;16;18) that is formed in right and left directions of vehicle body and fixedly connected with the sector gear (7) as a rotation axis of the sector gear (7), both ends of the actuation shaft (8;16;18) being rotatably supported by the seat side member;
an eccentric shaft (9) that is provided at the sector gear (7) in a different position from the actuation shaft (8;16;18) and projects substantially parallel to the actuation shaft (8;16;18);
a connecting arm (10) that is formed in forward and backward directions of the seat, and connects the eccentric shaft (9) and the driving link (5) for conveying a rotation of the sector gear (7) to the driving link (5); and
**characterized by**
a plate (11) provided at an axial side of the sector gear (7), the plate (11) being disposed substantially parallel to the sector gear (7) and fixedly connected with the actuation shaft (8;16;18) and further being connected with the eccentric shaft (9).

2. The belt-in-seat with the lifter as claimed in claim 1, wherein:
the plate (11) is disposed substantially parallel to the sector gear (7) with the connecting arm (10) sandwiched between the plate (11) and the sector gear (7), and fixedly connected with the actuation shaft (8;16;18) and further is connected with the eccentric shaft (9), and
the plate (11) and the sector gear (7) support both ends of the eccentric shaft (9) in cooperation with each other.

3. The belt-in-seat with the lifter as claimed in at least one of the claims 1 and 2, wherein:
one end portion of the actuation shaft (8;16;18), with which the sector gear (7) and the plate (11) are fixedly connected, is formed of solid material, and a portion connecting to the one end portion of the solid material is formed of a hollow member.

4. The belt-in-seat with the lifter as claimed in claim 1, further comprising:
a restraint member (13) which is provided at a top end side of the sector gear (7) meshed with the pinion gear (6c), rotatably supports a top end of the output shaft (6b) of the operating unit (6) and restrains a top end portion of the sector gear (7) from falling down in an axial direction of the output shaft (6b) by touching a side of the top end portion of the sector gear (7),
wherein:
a stopper (14) for stopping the restraint member (13) from being separated from the output shaft (6b) is connected to the top end of the output shaft (6b).

5. The belt-in-seat with the lifter as claimed in claim 4, wherein:
a convex section (13e, 13f) protruding toward the sector gear (7) in the axial direction of the output shaft (6b) is formed on an inner surface of the restraint member (13),
which faces the side of the top end portion of the sector gear (7).

6. The belt-in-seat with the lifter as claimed in claim 5, wherein:
the convex section (13e) is formed substantially along an arc of a semicircle.

7. The belt-in-seat with the lifter as claimed in claim 5, wherein:
the convex section is formed of a first convex section (13e) and a second convex section (13f), and
the second convex section (13f) protrudes more than the first convex section (13e) toward the sector gear (7) in the axial direction of the output shaft (6b).

8. The belt-in-seat with the lifter as claimed in claim 4, further comprising:
a disk (15) which is provided at the top end side of the sector gear (7) meshed with the pinion gear (6c) and is disposed to be sandwiched between the restraint member (13) and the stopper (14).

## Patentansprüche

1. Sitz mit integriertem Gurt mit Heber, der auf einem Fahrzeugboden montiert ist, umfassend: ein sitzseitges Bauteil, ein Paar Antriebsglieder (5), die jeweils an einer Rückseite des sitzseitigen Bauteils angeordnet sind, zwischen dem Fahrzeugboden und dem sitzseitigen Bauteil und die drehbeweglich mit dem sitzseitigen Bauteil verbunden sind, ein Paar Abtriebsglieder (4), die jeweils an einer Vorderseite des sitzseitigen Bauteils angeordnet sind, zwischen dem Fahrzeugboden und dem sitzseitigen Bauteil und die drehbeweglich mit dem sitzseitigen Bauteil verbunden sind, ein Antriebseinheit (6), die an dem sitzseitigen Bauteil angeordnet ist und ein Ritzelgetriebe (6c) an einer Antriebswelle (6b) der Antriebseinheit (6) aufweist, ein Sektionsgetriebe (7), das mit dem Ritzelgetriebe in Eingriff steht und durch die Antriebseinheit antreibbar ist, eine Antriebswelle (8, 16, 18), die in Querrichtung eines Fahrzeugskörpers als eine Rotationsachse des Sektionsgetriebes (7) angeordnet ist und die fest mit dem Sektionsgetriebe (7) verbunden ist, wobei beide Enden der Antriebswelle (8,16, 18) drehbeweglich durch das sitzseitige Bauteil gestützt sind, eine Exzenterwelle (9), die an dem Sektionsgetriebe (7) angeordnet ist, an einer anderen Stelle als die Antriebswelle (8, 16, 18) und die im Wesentlich parallel zu der Antriebswelle (8, 16, 18) hervorsteht, einen Verbindungsarm (10), der in einer Längsrichtung des Sitzes angeordnet ist und die Exzenterwelle (9) und das Antriebsglied (5) miteinander verbindet, um eine Drehbewegung des Sektionsgetriebes (7) auf das Antriebsglied zu übertragen, **gekennzeichnet durch** eine Platte (11), die an einer axialen Seite des Sektionsgetriebes (7) angeordnet ist, wobei die Platte (11) im Wesentlichen parallel zu dem Sektionsgetriebe (7) angeordnet ist und fest mit der Antriebswelle (8, 16, 18) verbunden ist und ebenso mit der Exzenterwelle (9) verbunden ist.

2. Sitz mit integriertem Gurt mit Heber nach Anspruch 1, wobei die Platte (11) im Wesentlichen parallel zu dem Sektionsgetriebe (7) angeordnet ist mit dem Verbindungsarm (10) zwischen der Platte (11) und dem Sektionsgetriebe (7) gelegen, und wobei die Platte (11) fest mit der Antriebswelle (8, 16, 18) verbunden ist und ebenso mit der Exzenterwelle (9) verbunden ist, und wobei die Platte (11) und das Sektionsgetriebe (7) zusammen die beiden Enden der Exzenterwelle (9) stützen.

3. Sitz mit integriertem Gurt mit Heber nach wenigstens einem der Ansprüche 1 oder 2, wobei ein Endabschnitt der Antriebswelle (8, 16, 18) mit dem Sektionsgetriebe (7) und der Platte (11) fest verbunden ist und aus massivem Metall gebildet ist und ein Abschnitt, der mit einem Endbereich des massivem Metall verbunden ist, als ein Hohlkörper ausgebildet ist.

4. Sitz mit integriertem Gurt mit Heber nach Anspruch 1, der ferner umfasst: ein Beschränkungsmittel (13), das an einem oberen Endabschnitt des Sektionsgetriebes (7) angeordnet ist und mit dem Ritzelgetriebe (6c) in Eingriff steht, und das drehbeweglich eine Oberseite der Abtriebswelle (6b) der Antriebseinheit (6) stützt sowie einen oberen Endabschnitt des Sektionsgetriebes von einem in Axialrichtung der Abtriebswelle gerichteten Herunterfallen zurückhält, durch Berührung des oberen Endabschnitts des Sektionsgetriebes (7), und wobei ein Haltemittel (14) mit dem oberen Endabschnitt des Sektionsgetriebes (7) verbunden ist, um das Beschränkungsmittel (13) daran zu hindern von der Abtriebswelle (6b) zu fallen.

5. Sitz mit integriertem Gurt mit Heber nach Anspruch 4, wobei ein konvexer Abschnitt (13e, 13f), der in Richtung des Sektionsgetriebes (7) in Axialrichtung der Abtriebswelle (6b) gerichtet ist, an einer inneren Oberfläche des Beschränkungsmittels (13) ausgebildet ist, und welcher zur Seite des oberen Endabschnitts des Sektionsgetriebes (7) gerichtet ist.

6. Sitz mit integriertem Gurt mit Heber nach Anspruch 5, wobei der konvexe Abschnitt (13e) im Wesentlichen entlang eines Kreisbogens ausgebildet ist.

7. Sitz mit integriertem Gurt mit Heber nach Anspruch 5, wobei der konvexe Abschnitt aus einem ersten konvexen Abschnitt (13e) und einem zweiten konvexen Abschnitte (13f) gebildet ist und der zweite konvexe Abschnitt (13f) mehr als der erste konvexe Abschnitt (13e) in Richtung des Sektionsgetriebes (7) in Axialrichtung der Abtriebswelle (6b) hervorsteht.

8. Sitz mit integriertem Gurt mit Heber nach Anspruch 4, der ferner umfasst: eine Scheibe (15), die an dem oberen Endabschnitt des Sektionsgetriebes (7) angeordnet ist und mit dem Ritzelgetriebe (6c) in Eingriff steht und zwischen dem Beschränkungsmittel (13) und dem Haltemittel (14) gelegen ist.

## Revendications

1. Système de retenue au siège avec un organe de levage monté sur un plancher de caisse de véhicule, comprenant:
un élément latéral de siège;
une paire de liaisons d'entraînement (5), chacune étant réalisée à un côté arrière de l'élément latéral de siège entre le plancher de la caisse du véhicule et l'élément latéral de siège et est reliée d'une manière tournante à l'élément latéral de siège;
une paire de liaisons menées (4) dont chacune est réalisée à un côté frontal de l'élément latéral de siège entre le plancher de la caisse de véhicule et l'élément latéral de siège et est reliée d'une manière tournante à l'élément latéral de siège;
une unité d'opération (6) qui est réalisée à l'élément de siège et qui possède un pignon (6c) à un arbre de sortie (6b) de l'unité d'opération (6);
un secteur denté (7) qui engrène avec le pignon (6c) et qui est entraîné par l'unité d'opération (6);
un arbre d'actionnement (8; 16; 18) qui est formé dans les directions droite et gauche de la caisse de véhicule et qui est relié fixement au secteur denté (7) comme axe de rotation du secteur denté (7), les deux extrémités de l'arbre d'actionnement (8; 16; 18) étant supportées en rotation par l'élément de siège latéral;
un arbre excentrique (9) qui est réalisé au secteur denté (7) dans une position différente de l'arbre d'actionnement (8; 16; 18) et qui fait saillie sensiblement parallèlement à l'arbre d'actionnement (8; 16; 18);
un bras de connection (10) qui est formé dans les directions avant et arrière du siège et qui relie l'arbre excentrique (9) et la liaison d'entraînement (5) pour convoyer une rotation du secteur denté (7) à la liaison d'entraînement (5); et
**caractérisé par**
une plaque (11) réalisée à un côté axial du secteur denté (7), la plaque (11) étant disposée sensiblement parallèlement au secteur denté (7) et étant reliée fixement à l'arbre d'actionnement (8; 16; 18) et étant reliée en outre à l'arbre excentrique (9).

2. Système de retenue au siège avec l'organe de levage selon la revendication 1, dans lequel:
la plaque (11) est disposée sensiblement parallèlement au secteur denté (7), le bras de connection (10) étant pris en sandwich entre la plaque (11) et le secteur denté (7) et étant relié fixement à l'arbre d'actionnement (8; 16; 18) et est relié en outre à l'arbre excentrique (9), et
la plaque (11) et le secteur denté (7) supportent les deux extrémités de l'arbre excentrique (9) par une coopération entre eux.

3. Système de retenue au siège avec l'organe de levage selon au moins l'une des revendications 1 et 2, dans lequel: une portion d'extrémité de l'arbre d'actionnement (8; 16; 18), à laquelle le secteur denté (7) et la plaque (11) sont reliés fixement, est réalisée en un matériau solide, et une portion reliée à la portion d'extrémité précitée en matériau solide est réalisée en un élément creux.

4. Système de retenue au siège avec l'organe de levage selon la revendication 1, comprenant en outre:
un élément de contrainte (13) qui est réalisé à un côté d'extrémité supérieur du secteur denté (7) engrenant avec le pignon (6c), supporte en rotation une extrémité supérieure de l'arbre de sortie (6b) de l'unité d'opération (6) et empêche une portion d'extrémité supérieure du secteur denté (7) de tomber dans une direction axiale de l'arbre de sortie (6b) en touchant un côté de la portion d'extrémité supérieure du secteur denté (7),
dans lequel:
une butée d'arrêt (14) pour empêcher une séparation de l'élément de contrainte (13) de l'arbre de sortie (6b) est reliée à l'extrémité supérieure de l'arbre de sortie (6b).

5. Système de retenue au siège avec l'organe de levage selon la revendication 4, dans lequel:
une section convexe (13e, 13f) faisant saillie vers le secteur denté (7) dans la direction axiale de l'arbre de sortie (6b) est formée sur une surface intérieure de l'élément de contrainte (13) qui est orientée vers le côté de la portion d'extrémité supérieure du secteur denté (7).

6. Système de retenue au siège avec l'organe de levage selon la revendication 5, dans lequel:
la section convexe (13e) est formée sensiblement le long d'un arc d'un semi-cercle.

7. Système de retenue au siège avec l'organe de levage selon la revendication 5, dans lequel:
la section convexe est formée par une première section convexe (13e) et une deuxième section convexe (13f), et
la deuxième section convexe (13f) fait saillie davantage que la première section convexe (13e) vers le secteur denté (7) dans la direction axiale de l'arbre de sortie (6b).

8. Système de retenue au siège avec l'organe de levage selon la revendication 4, comprenant en outre:
un disque (15) qui est réalisé à un côté d'extrémité supérieur du secteur denté (7) engrenant avec le pignon (6b) et est disposé pour être pris en sandwich entre l'élément de contrainte (13) et la butée d'arrêt (14).
